# FASCICULE DE BREVET EUROPEEN

(11) **EP 2 956 285 B1**
(45) Date de publication et mention de la délivrance du brevet: **28.03.2018**
(21) Numéro de dépôt: 14704557.9
(22) Date de dépôt: 11.02.2014
(51) Int. Cl.: B29B 9/02, B29B 9/16, F26B 1/00, B29B 9/12, B01F 13/10

(54) **PROCEDÉ ET DISPOSITIF POUR L'OBTENTION EN CONTINU D'UN MATÉRIAU POLYMÈRE ADDITIVÉ GRANULAIRE SEC**
VERFAHREN UND VORRICHTUNG ZUR KONTINUIERLICHEN GEWINNUNG EINES DURCH EIN TROCKENES GRANULIERTES ADDITIV VERSTÄRKTEN POLYMERMATERIALS
PROCESS AND DEVICE FOR CONTINUOUSLY OBTAINING A DRY GRANULAR ADDITIVE-ENHANCED POLYMER MATERIAL

(30) Priorité: 12.02.2013 EP 13356001; 07.08.2013 FR 1357864
(43) Date de publication de la demande: 23.12.2015
(73) Titulaire: ICO Polymers France, 77130 Montereau Fault Yonne (FR)
(72) Inventeur: MARCESSE, Jean, F-30300 Beaucaire (FR)
(74) Mandataire: Cornuejols, Georges
(86) Numéro de dépôt international: PCT/EP2014/052672
(87) Numéro de publication internationale: WO 2014/124947

(56) Documents cités:
- EP-A1- 1 236 790
- DE-A1- 4 327 164
- FR-A5- 2 167 291
- US-A- 5 375 778
- US-A1- 2005 269 433
- US-A1- 2011 168 816
- US-B1- 6 270 708

## Description

### DOMAINE TECHNIQUE DE L'INVENTION

L'invention concerne un procédé pour l'obtention en continu d'un matériau polymère additivé granulaire sec, ainsi qu'un dispositif pour la mise oeuvre de ce procédé. Elle s'applique, en particulier, à l'obtention en continu d'un matériau polymère additivé granulaire sec à partir d'un matériau polymère de départ se présentant sous forme de blocs solides et humides.

### ETAT DE LA TECHNIQUE

Le nom « additif » désigne une substance chimique souvent liquide ou en poudre, qui est, en général, introduite avant ou pendant la mise en forme du matériau, pour apporter ou améliorer au moins une propriété spécifique. L'incorporation en masse est faible, de quelques pourcents au maximum, à la différence d'une charge. Les additifs sont compatibles avec le matériau pour obtenir un mélange homogène, et stables aux conditions de mise en forme, en particulier à la température, et au cours du temps. Ils peuvent être utilisés pour obtenir un effet positif en phases de production, de stockage, de traitement, et/ou pendant et après la phase d'utilisation du produit.

On note que, au sens de la présente invention, les additifs pourront représenter, dans le produit final, un pourcentage en masse supérieur à dix pourcents, voire plus de la moitié du produit final. Ils recouvrent ainsi tant la notion traditionnelle d'additif que la notion traditionnelle de charge.

On connaît le document EP 1 236 790, qui décrit un dispositif dans lequel des déchets plastiques contenant des matières plastiques, des matières plastiques solides en tranches et les matières plastiques moussées sont fournis dans une filière annulaire d'un dispositif d'extrusion de matière plastique. Les déchets en plastique sont à moitié fondus ou fondus et extrudés à partir d'orifices de filière de la surface périphérique extérieure d'une filière annulaire. Les pièces moulées en plastique extrudées sont coupées ou grattées de la surface annulaire périphérique externe. Chaque morceau moulé présente une surface de masse fondue solidifiée, une résistance capable d'atteindre une zone prédéfinie dans un chemin de roulement de four lorsqu'il est soufflé dans le four, et une taille de grain capable de fournir des vitesses supérieures à la vitesse critique.

Les procédés utilisés actuellement pour la transformation de matière solide et humide en un matériau granulaire sec additivé par des matériaux pulvérulents ont l'inconvénient majeur d'être des procédés discontinus, c'est-à-dire par une succession d'un traitement de l'intégralité d'un lot avant de lui appliquer le traitement suivant, chaque lot étant traité séquentiellement. Ces procédés sont ainsi, à la fois, compliqués, difficiles à mettre en oeuvre dans une journée de travail et coûteux en main d'oeuvre. Leur coût de mise en oeuvre est donc élevé.

### OBJET DE L'INVENTION

La présente invention vise à remédier à tout ou partie de ces inconvénients.

A cet effet, selon un premier aspect, la présente invention vise un procédé pour l'obtention d'un matériau polymère additivé granulaire sec comportant une première étape de broyage de blocs d'un matériau polymère de départ dans un premier broyeur alimenté en gaz chaud, pour obtenir un matériau polymère broyé sous forme de particules, qui comporte, de plus :
- une première étape de dosage d'au moins un premier additif,
- une première étape d'addition aux particules de matériau polymère broyé, de chaque premier additif dosé ;
- une étape de séparation solide/gaz au cours de laquelle on sépare les matières solides et le gaz chargé d'humidité issus de la première étape d'addition ;
- une première étape de mélange des matières solides en mettant en oeuvre un mélangeur ;
- une étape de séparation de particules pour séparer des plus grosses particules issues du mélangeur des plus petites particules issues du mélangeur ;
- une deuxième étape de broyage des plus grosses particules avec un second broyeur alimenté en gaz chaud,
- une étape de ré-injection des particules issues de la seconde étape de broyage pour les retourner à l'étape de séparation solide/gaz et
- une étape de conditionnement des plus petites particules mélangées constituées de matériau polymère additivé granulaire sec.

Grâce à ces dispositions, on obtient en continu un matériau polymère additivé granulaire sec, à partir d'un matériau polymère de départ se présentant sous forme de blocs solides et humides. Ce procédé est simple, peu coûteux à mettre en place et à faire fonctionner, adaptable et peu dangereux. De plus, ce procédé peut être entièrement automatisé, l'intervention humaine pouvant se limiter à l'introduction des blocs de matériau polymère et des moyens de conditionnement vides et au retrait des moyens de conditionnement pleins de matériau polymère additivé granulaire sec.

Selon des caractéristiques particulières, au cours de la première étape d'addition de chaque premier additif dosé, on transporte le matériau polymère broyé vers un moyen de séparation solide/gaz réalisant l'étape de séparation.

Grâce à ces dispositions, le matériau polymère broyé est en mouvement au cours de l'étape d'addition et peut recevoir, successivement les différents additifs.

Selon des caractéristiques particulières, le procédé objet de la présente invention comporte, en outre, une deuxième étape de mélange des plus petites particules issues de l'étape de séparation de particules, avant l'étape de conditionnement.

Grâce à ces dispositions, les plus petites particules sont mieux mélangées à chaque additif et le matériau polymère additivé granulaire sec est plus homogène.

Selon des caractéristiques particulières, chaque premier additif est choisi dans le groupe constitué par la silice, le talc, les polyphtalamides (« PPA »), les antioxydants, le carbonate de calcium, le sulfate de baryum et les mélanges de ces composés.

Selon des caractéristiques particulières, le procédé objet de la présente invention comporte, en outre :
- une deuxième étape de dosage d'au moins un deuxième additif,
- une deuxième étape d'addition aux particules les plus petites issues de l'étape de séparation de particules, de chaque deuxième additif dosé.

Grâce à ces dispositions, plus d'additif peut être incorporé dans le matériau polymère additivé granulaire sec.

Selon des caractéristiques particulières, chaque deuxième additif est choisi dans le groupe constitué par le polyéthylène glycol (« PEG »), les polyphtalamides (« PPA ») et leurs mélanges.

Selon des caractéristiques particulières, les additifs ont une granulométrie d'au plus 100 microns et dans lequel, au cours de l'étape de séparation de particules, les plus petites particules ont une granulométrie inférieure à 2000 microns.

Selon des caractéristiques particulières, le matériau polymère de départ comprend au moins un polymère choisi dans le groupe constitué par les polymères du type styrène-butadiène-styrène (« SBS »), styrène-éthylène-butadiène-styrène (« SEBS ») ou butadiène-acrylonitrile (« NBR »), les polymères fluorés, les polymères obtenus par coagulation ou par voie humide, les élastomères fluorés à forte viscosité et les polymères de masse moléculaire élevée, ne pouvant être extrudé.

Selon un deuxième aspect, la présente invention vise un dispositif pour l'obtention d'un matériau polymère additivé granulaire sec, comportant un premier broyeur de blocs d'un matériau polymère de départ alimenté en gaz chaud, pour obtenir un matériau polymère broyé sous forme de particules, qui comporte, de plus :
- un premier moyen de dosage d'au moins un premier additif et d'addition aux particules de matériau polymère broyé, de chaque premier additif dosé ;
- un moyen de séparation solide/gaz pour séparer les matières solides et le gaz chargé d'humidité issus du premier moyen d'addition ;
- un premier mélangeur pour mélanger les matières solides ;
- un séparateur de particules pour séparer des plus grosses particules issues du mélangeur des plus petites particules issues du mélangeur ;
- un deuxième broyeur pour broyer les plus grosses particules, alimenté en gaz chaud,
- un moyen de ré-injection des particules sortant du deuxième broyeur dans le moyen de séparation solide/gaz et
- un moyen de conditionnement des plus petites particules mélangées constituées de matériau polymère additivé granulaire sec.

Les avantages, buts et caractéristiques particulières de ce dispositif étant similaires à ceux du procédé objet de la présente invention, ils ne sont pas rappelés ici.

Selon des caractéristiques particulières, le premier moyen de dosage et d'addition de chaque premier additif dosé est configuré pour transporter le matériau polymère broyé vers le moyen de séparation solide/gaz.

Selon des caractéristiques particulières, le dispositif objet de la présente invention comporte, en outre, un deuxième mélangeur pour mélanger des plus petites particules issues du séparateur de particules.

Selon des caractéristiques particulières, chaque premier additif est choisi dans le groupe constitué par la silice, le talc, les polyphtalamides (« PPA »), les antioxydants, le carbonate de calcium, le sulfate de baryum et les mélanges de ces composés.

Selon des caractéristiques particulières, le dispositif objet de la présente invention comporte, en outre :
- un deuxième moyen de dosage d'au moins un deuxième additif,
- un deuxième moyen d'addition aux particules les plus petites issues du séparateur de particules, de chaque deuxième additif dosé.

Selon des caractéristiques particulières, chaque deuxième additif est choisi dans le groupe constitué par le polyéthylène glycol (« PEG »), les polyphtalamides (« PPA ») et les mélanges de ces composés.

Selon des caractéristiques particulières, le matériau polymère de départ comprend au moins un polymère choisi dans le groupe constitué par les polymères du type styrène-butadiène-styrène (« SBS »), styrène-éthylène-butadiène-styrène (« SEBS ») ou butadiène-acrylonitrile (« NBR »), les polymères fluorés, les polymères obtenus par coagulation ou par voie humide, les élastomères fluorés à forte viscosité et les polymères de masse moléculaire élevée, ne pouvant être extrudé.

### BREVE DESCRIPTION DES FIGURES

D'autres avantages, buts et caractéristiques de la présente invention ressortiront de la description qui va suivre, en regard des dessins annexés, dans lesquels :
- la figure 1 représente, schématiquement, un mode de réalisation particulier du dispositif objet de la présente invention et
- la figure 2 représente, sous forme de logigramme, des étapes d'un mode de réalisation particulier du procédé objet de la présente invention.

### DESCRIPTION D'EXEMPLES DE REALISATION DE L'INVENTION

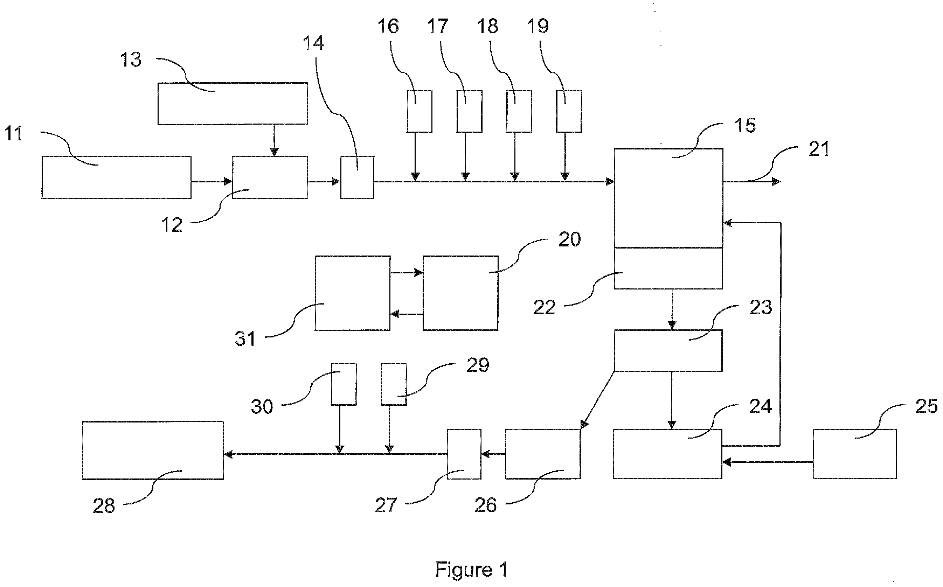

On note, dès à présent, que la figure 1 n'est pas à l'échelle.

Préliminairement aux autres étapes, on définit une formulation de polymère additivé en donnant des valeurs de paramètres, tels que les proportions de polymère et d'additifs, à un programme informatique implémenté par une unité de commande 20.

Au cours du fonctionnement du dispositif illustré en figure 1, on part d'un matériau polymère qui se présente sous forme de blocs solides et humides agglomérés, communément appelés « clumps ». Ces blocs ont, par exemple, des dimensions comprises entre 100 x 100 x 100 mm et 500 x 500 x 500 mm, et, plus particulièrement, entre 200 x 200 x 200 mm et 400 x 400 x 200 mm.

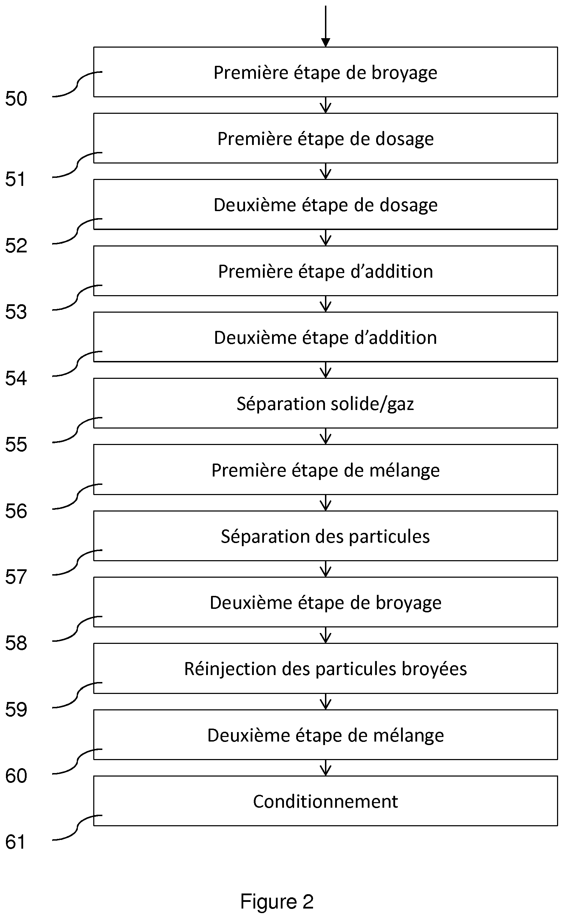

Ces blocs de matériau solide et humide sont déposés de façon manuelle ou, de préférence, automatisée, sur un moyen d'introduction 11 tel qu'une bande de convoyeur, puis introduits dans un premier broyeur 12 où ils sont broyés, étape 50 de la figure 2. Préférentiellement, les blocs sont broyés tout en étant séchés par un gaz chaud, en général de l'air, provenant d'un premier moyen de production de gaz chaud 13, comme un ventilateur ou une soufflerie par exemple.

Le matériau broyé et partiellement séché est ensuite extrait du broyeur 12 puis convoyé par un moyen de transport 14 approprié tel qu'une bande transporteuse ou une conduite, vers un moyen de séparation solide/gaz 15 tel qu'un filtre.

Au cours de ce convoyage, le matériau est additionné, étapes 53 et 54 de la figure 2, d'une quantité précise d'un premier additif par un premier doseur 16, et éventuellement d'autres quantités précises d'autres premiers additifs par d'autres premiers doseurs 17, 18 et 19. Ces premiers additifs sont dosés au cours d'étapes de dosage 51 et 52 illustrées en figure 2.

De préférence, la première unité de commande électronique 20, telle qu'une armoire de dosage, commande chaque premier doseur 17 à 19 pour qu'il délivre une quantité d'un premier additif qui est fonction d'une formulation prédéterminée paramétrée dans cette unité de commande 20.

A l'intérieur du moyen de séparation solide/gaz 15 a lieu la séparation, étape 55 de la figure 2, de l'ensemble matériau broyé et partiellement séché et premiers additifs et de l'air chaud, celui-ci étant en grande partie expulsé vers une sortie 21.

L'ensemble matériau broyé et partiellement séché et premiers additifs est ensuite dirigé vers un mélangeur 22 où il est mélangé, étape 56 de la figure 2, de façon à ce que chaque premier additif s'incorporent bien et de manière homogène au matériau broyé.

Le mélangeur 22 stocke également et provisoirement le mélange avant qu'il ne soit extrait et amené par gravité ou par transport pneumatique dans un séparateur de particules 23, tel qu'un tamis, dans lequel les plus grosses particules sont séparées des plus petites, étape 57 de la figure 2.

Les grosses particules sont ensuite envoyées par gravité ou transport pneumatique dans un second broyeur 24 où elles sont broyées, étape 58 de la figure 2, tout en étant séchées par un gaz chaud, en général de l'air, provenant d'un deuxième moyen de production de gaz chaud 25, comme par exemple d'un ventilateur ou d'une soufflerie. Puis, les plus grosses particules, broyées et partiellement séchées, ainsi que l'air chaud sont renvoyées, étape 59 de la figure 2, dans le moyen de séparation solide/gaz 15.

Les plus petites particules sont envoyées par gravité ou par transport pneumatique vers un second mélangeur 26 dans lequel elles sont mélangées, étape 60 de la figure 2, entre elles, avant d'être fournies à un moyen de transport 27 approprié tel qu'une bande transporteuse ou une conduite, pour être transportées vers un moyen de conditionnement 28.

Au cours de leur transport, les plus petites particules sont de préférence additionnées d'une quantité précise d'un second additif par un second doseur 29, et éventuellement d'une autre quantité précise d'un autre second additif par un autre second doseur 30, et le cas échéant d'autres quantités précises d'autres seconds additifs par d'autres seconds doseurs non représentés sur la figure.

De préférence, la première unité de commande électronique 20 précitée commande également chaque second doseur 29 et 30 de manière à ce qu'il délivre une quantité de second additif qui est aussi fonction de la formulation prédéterminée paramétrée dans l'unité de commande 20.

A l'arrivée dans le moyen de conditionnement 28, le matériau polymère additivé granulaire sec obtenu est conditionné, étape 61 de la figure 2, de manière connue.

La présence d'un second doseur 29 a l'avantage de permettre le recyclage proportionnel des matériaux polymères secs conforme ou non conforme. Au point "A" situé entre 12 et 14 pour les matériaux polymères secs, dont la granulométrie n'est pas conforme. Au point "B" situé entre 27 et 30 pour les matériaux polymères secs, dont la granulométrie est conforme.

De préférence, il est prévu une seconde unité de commande électronique 31 pour commander le fonctionnement des broyeurs 12 et 24, des moyens de transport 14 et 27, des moyens de séparation 15 et 23, des mélangeurs 22 et 26 ainsi que des moyens de production de gaz chaud 13 et 25.

La première unité de commande 20 et la seconde unité de commande 31 sont prévues pour coopérer l'une avec l'autre.

Les additifs sont préférentiellement pulvérulents, c'est-à-dire qu'ils ont une granulométrie, mesurée par tamisage, d'au plus 100 microns. De préférence, leur granulométrie est inférieure à 50 microns.

Il est avantageux de prévoir que la seconde unité de commande 31 règle le séparateur de particules 23 de façon à ce qu'il ne laisse passer que les particules ayant une granulométrie inférieure à 2000 microns.

Le matériau polymère de départ peut avoir un taux d'humidité compris entre 2 % et 30 %. Il peut être constitué d'un seul polymère ou d'un mélange de polymères de natures diverses. A titre d'exemple, on peut citer les polymères appartement au groupe constitué par les polymères du type styrène-butadiène-styrène (« SBS »), styrène-éthylène-butadiène-styrène (« SEBS ») ou butadiène-acrylonitrile (« NBR »), les polymères fluorés, les polymères obtenus par coagulation ou par voie humide, les élastomères fluorés à forte viscosité qui ne peuvent pas être séchés par extrusion et les polymères de masse moléculaire élevée, comme le polyphtalamide (« PPA ») de densité 1,8.

A titre de premiers additifs, on peut citer, par exemple, la silice, le talc, les polyphtalamides (« PPA »), les antioxydants tels que ceux commercialisés sous la marque déposée IRGANOX, le carbonate de calcium, le sulfate de baryum. Bien entendu, ces composés peuvent être utilisés seuls ou en combinaison, en fonction des performances du matériau final désirées. La première addition peut se faire à une température comprise entre 70°C et 80°C.

A titre de seconds additifs, on peut citer le polyéthylène glycol (« PEG ») et les polyphtalamides (« PPA ») tels que ceux recyclés pour cause de non-conformité ou défaut de qualité. Bien entendu, on peut utiliser un mélange de PEG et de PPA. De préférence, on utilise du polyéthylène glycol. On note que les seconds additifs peuvent représenter, dans le produit final, plus de la moitié de la masse. La seconde addition peut se faire à une température inférieure à 40°C.

La répartition des additifs entre les premiers doseurs et les seconds doseurs tient compte de la différence d'humidité dans le matériau et de la différence de température du matériau, humidité et température qui décroissent au cours du cheminement du matériau dans le dispositif et au cours du procédé.

Les additifs ont pour fonction d'assurer la conservation du produit final, par exemple pendant deux ans, d'empêcher qu'il ne forme des agrégats. Les additifs sont compatibles avec les utilisations ultérieures visées du produit final. Par exemple, ils sont de classe alimentaire en cas d'utilisation du produit final dans l'industrie agro-alimentaire, par exemple sous forme de films.

Préférentiellement, le second broyeur 24 est prévu pour fournir à sa sortie des particules micronisées, c'est-à-dire ayant une granulométrie comprise entre 30 et 2000 µm.

De préférence, la seconde unité de commande 31 règle le premier moyen de production de gaz chaud 13 alimentant le premier broyeur 12 et/ou le second moyen de production de gaz chaud 25 alimentant le second broyeur 24 de façon à ce que le pourcentage d'humidité résiduelle du matériau polymère additivé granulaire arrivant dans le moyen de conditionnement soit inférieur à 1 %. On peut même obtenir, dans certains cas, un produit final ayant un taux d'humidité résiduelle inférieur à 0,15 %.

Ainsi, le procédé et le dispositif décrit en regard des figures rend possible l'obtention, à partir d'une alimentation discontinue en matériau de départ, d'une sortie continue, lissée, de matériau final.

De plus, ce procédé et ce dispositif permettent, quel que soit le taux d'humidité du matériau de départ, sous réserve que ce taux soit d'au plus 30% en poids rapporté au poids total de matériau, d'aboutir à un matériau final ayant un taux d'humidité toujours inférieur à 1 %.

En outre, ce résultat est obtenu bien que l'alimentation en matériau de départ soit irrégulière en termes de poids.

Ainsi, il est surprenant de constater qu'en alimentant de manière discontinue le moyen d'introduction 11 avec un matériau de départ de masse incertaine et de taux d'humidité inconnu, on obtient au niveau du moyen de conditionnement un matériau final ayant une granulométrie et un taux d'humidités respectant toujours les critères prédéterminés par les unités de commande 20 et 31, préférentiellement une granulométrie moyenne inférieure à 2000 µm et un taux d'humidité résiduelle moyen inférieur à 1 %.

Ce procédé et ce dispositif permettent d'obtenir un matériau micronisé sec, quel que soit le pourcentage d'humidité contenue dans le matériau solide de départ.

Les unités de commande 20 et 31 parviennent à établir un flux continu de matériau micronisé sec et avec un débit stabilisé, ce qui rend possible l'injection des additifs à l'aide des doseurs en respectant les pourcentages prédéterminés pour la formulation choisie et ceci, indépendamment du pourcentage d'humidité contenu dans le matériau solide humide introduits par le moyen d'introduction 11 dans le broyeur 12.

Le moyen d'introduction 11 est un moyen d'introduction qui permet de doser et donc de réguler le débit (masse, temps) d'entrée du matériau solide et humide de départ dans le broyeur 12.

L'obtention de la granulométrie désirée est obtenue par le broyeur 12 et/ou le second broyeur 24 qui réceptionne(nt) le matériau provenant du moyen d'introduction 11 et/ou du séparateur de particules, ou tamis, 23.

Le broyeur 12 est configuré pour réduire le matériau solide et humide en particules de 10 mm environ et le broyeur 17 abaisse encore la granulométrie du matériau broyé précédemment et tamisé, de façon à produire des particules fines, c'est-à-dire ayant préférentiellement une granulométrie inférieure à 2000 microns et de préférence micronisées.

La régulation du débit du matériau final, à savoir le polymère granulaire sec additivé, est rendue possible par les actions combinées des différents moyens suivants :
- le dosage par le moyen d'introduction 11 du matériau de départ solide et humide ;
- le mélange et la stabilisation du débit du matériau broyé une première fois et partiellement séché dans le mélangeur 22 ;
- le mélange et la stabilisation du débit du matériau micronisé et sec partiellement additivé dans le mélangeur 26 ;
- le séchage par introduction d'air chaud dans les broyeurs 12 et 24.

Le mélangeur 22 a pour action non seulement de mélanger mais aussi de contribuer à la régulation du débit du matériau solide broyé une première fois, en augmentant son temps de séjour, celui-ci étant, par exemple, d'environ 17 minutes mais pouvant être varié par réglage.

Chaque premier doseur 16 à 19 stabilise, lui aussi, le débit du matériau qui a été broyé une première fois et mélangé aux premiers additifs. Chaque premier doseur divise le flux, suivant la granulométrie désirée, qui est variable par réglage.

Le mélangeur 26 stabilise et poursuit le mélange du matériau micronisé et sec et des premiers additifs. Préférentiellement, le mélangeur 26 dose par débordement les matériaux avant leur transport par le moyen de transport 27 vers le moyen de conditionnement 28.

Les moyens de production de gaz chaud, 13 et 25, qui sont par exemples des souffleries, fournissent un important volume d'air chaud filtré qui est injecté dans les broyeurs 12 et 24 et dans les tubulures entre les différents éléments du dispositif afin d'évaporer l'eau contenu dans les matériaux, c'est-à-dire le matériau de départ et des additifs. L'air chargé, voire saturé en eau, est rejeté dans l'atmosphère par la sortie 21.

Les seconds doseurs 29 et 30 servent à introduire dans le flux de matériau granulaire sec des additifs préférentiellement granulaires ou pulvérulents, en fonction de la formulation et du début du matériau broyé sec, par exemple micronisé.

La première unité de commande 20, connue en elle-même, comprend une sous-unité logique qui permet de paramétrer et gérer des formulations de différents additifs par l'intermédiaire des premiers et seconds doseurs, en fonction de la masse volumique apparente, ou « MVA », de ces additifs, et ceci proportionnellement au matériau solide humide introduit par le moyen d'introduction 11.

Cette première unité de commande 20 permet aussi la mise en oeuvre de signaux rendant possible une gestion automatique des défauts des moyens 11, 22, 23 et 26 et des premiers doseurs 16, 17, 18, 19 et des seconds doseurs 29, 30 dans un ordre prédéfini si ceux-ci fonctionnent, afin de ne pas perturber le débit stabilisé du matériau et des additifs dans le dispositif selon l'invention.

La seconde unité de commande 31 est également connue en elle-même et elle comprend une sous-unité logique qui permet paramétrer et gérer le fonctionnement des différents moyens constituant le dispositif selon l'invention. En particulier, elle peut réguler la température des moyens de production de gaz chaud, 13 et 25, qui sont par exemple des souffleries, en fonction de la température régnant dans les broyeurs 12 et 24.

La seconde unité de commande 31 est préférentiellement reliée à la première unité de commande 20 afin de pouvoir coopérer avec elle.

### Exemples

### Exemple 1 (absence de seconds additifs)

On prépare du polyphtalamide (« PPA ») additivé de la manière suivante.

Des balles de polyphtalamide sont déposées sur le moyen d'introduction 11, puis broyées. De la silice, du talc et du carbonate de calcium sont délivrés respectivement par les premiers doseurs 16, 17 et 18.

Après filtration, mélange, tamisage, nouveau mélange et passage dans une trémie de conditionnement, le produit fini est conditionné dans des sacs en matière plastiques, eux-mêmes conditionnés dans des cartons, sous la trémie de conditionnement, à l'intérieur d'une salle grise.

Le dosage des additifs s'effectue en continu. Le temps total de cycle pour une balle de 10 kg équivalent matière sèche de produit de départ est de 320 secondes, c'est-à-dire qu'une balle est posée sur le tapis doseur toutes les 320 secondes.

Le produit de départ, les balles de polyphtalamide, possède un taux d'humidité de vingt pourcents en poids, c'est-à-dire que chaque balle pèse en tout 12,5 kg.

A partir de ces balles de 300 x 300 x 200 mm, on obtient un matériau final composé de granulés ayant une taille moyenne de 500 µm et un taux d'humidité inférieur à 1 %.

### Exemple 2 (présence de seconds additifs)

On prépare du polyphtalamide (« PPA ») additivé de la manière suivante.

Des balles de polyphtalamide sont déposées sur le moyen d'introduction 11, puis broyées. De la silice, du talc et du carbonate de calcium sont délivrés respectivement par les doseurs 16, 17 et 18. Après filtration, mélange, tamisage, nouveau mélange et ajout de polyéthylène glycol (« PEG ») et de polyphtalamide recyclé, via les doseurs 29 et 30, puis passage dans une trémie de conditionnement, le produit fini est conditionné dans des sacs plastiques et des cartons sous la trémie de conditionnement, à l'intérieur d'une salle grise.

Le dosage des additifs s'effectue en continu. Le temps total de cycle pour une balle de douze kilogrammes de produit de départ est de 327 secondes.

A partir de ces balles de 300 x 300 x 200 mm, on obtient un matériau final composé de granulés ayant une taille moyenne de 500 µm et un taux d'humidité inférieur à 1 %.

### Exemple 3 (présence de seconds additifs)

On prépare du polyphtalamide (« PPA ») additivé de la manière suivante.

Des balles de polyphtalamide sont déposées sur le moyen d'introduction 11, puis broyées. De talc, du polyphtalamide recyclé, du carbonate de calcium et de l'anti-oxydant de marque IRGANOX sont délivrés respectivement par les doseurs 16, 17, 18 et 19.

Après filtration, mélange, tamisage, nouveau mélange et ajout de polyphtalamide recyclé et de polyéthylène glycol (« PEG »), via les doseurs 29 et 30, puis passage dans une trémie de conditionnement, le produit fini est conditionné dans des sacs plastiques et cartons sous la trémie de conditionnement, à l'intérieur d'une salle grise.

Le dosage des additifs s'effectue en continu. Le temps total de cycle pour une balle de 12,5 kilogrammes de produit de départ est de 100 secondes.

A partir de ces balles de 300 x 300 x 200 mm, on obtient un matériau final composé de granulés ayant une taille moyenne de 500 µm et un taux d'humidité inférieur à 1 %.

### NOMENCLATURE

- 11: Moyen d'introduction
- 12: Broyeur
- 13: Moyen de production d'un gaz chaud
- 14: Moyen de transport
- 15: Moyen de séparation solide/gaz
- 16: Premier doseur
- 17: Premier doseur
- 18: Premier doseur
- 19: Premier doseur
- 20: Première unité de commande électronique
- 21: Sortie
- 22: Mélangeur
- 23: Séparateur de particules
- 24: Second broyeur
- 25: Moyen de production de gaz chaud
- 26: Second mélangeur
- 27: Moyen de transport
- 28: Moyen de conditionnement
- 29: Second doseur
- 30: Second doseur
- 31: Seconde unité de commande électronique

- 50: Première étape de broyage
- 51: Première étape de dosage
- 52: Deuxième étape de dosage
- 53: Première étape d'addition
- 54: Deuxième étape d'addition
- 55: Séparation solide/gaz
- 56: Première étape de mélange
- 57: Séparation des particules
- 58: Deuxième étape de broyage
- 59: Réinjection des particules broyées
- 60: Deuxième étape de mélange
- 61: Conditionnement

## Revendications

1. Procédé pour l'obtention d'un matériau polymère additivé granulaire sec, qui comporte une première étape (50) de broyage de blocs d'un matériau polymère de départ dans un premier broyeur (12) alimenté en gaz chaud, pour obtenir un matériau polymère broyé sous forme de particules, qui comporte, de plus :
- une première étape (51, 16 à 19) de dosage d'au moins un premier additif,
- une première étape (53, 16 à 19) d'addition aux particules de matériau polymère broyé, de chaque premier additif dosé ;
- une étape (55, 15) de séparation solide/gaz au cours de laquelle on sépare les matières solides et le gaz chargé d'humidité issus de la première étape d'addition ;
- une première étape (56) de mélange des matières solides en mettant en oeuvre un mélangeur (22);
- une étape (57, 23) de séparation de particules pour séparer des plus grosses particules issues du mélangeur (22) des plus petites particules issues du mélangeur (22);
- une deuxième étape (58) de broyage des plus grosses particules avec un second broyeur (24) alimenté en gaz chaud,
- une étape (59) de ré-injection des particules issues de la seconde étape (58, 24) de broyage pour les retourner à l'étape (15) de séparation solide/ gaz,
- une étape (61, 28) de conditionnement des plus petites particules mélangées constituées de matériau polymère additivé granulaire sec.

2. Procédé selon la revendication 1, dans lequel, au cours de la première étape (53) d'addition de chaque premier additif dosé, on transporte le matériau polymère broyé vers un moyen (15) de séparation solide/gaz réalisant l'étape de séparation solide/gaz.

3. Procédé selon l'une des revendications 1 ou 2, qui comporte, en outre, une deuxième étape (60, 26) de mélange des plus petites particules issues de l'étape (57, 23) de séparation de particules, avant l'étape (61, 28) de conditionnement.

4. Procédé selon l'une des revendications 1 à 3, dans lequel chaque premier additif est choisi dans le groupe constitué par la silice, le talc, les polyphtalamides (« PPA »), les antioxydants, le carbonate de calcium, le sulfate de baryum et les mélanges de ces composés.

5. Procédé selon l'une des revendications 1 à 4, qui comporte, en outre :
- une deuxième étape (52, 29, 30) de dosage d'au moins un deuxième additif,
- une deuxième étape (54) d'addition aux particules les plus petites issues de l'étape (57, 23) de séparation de particules, de chaque deuxième additif dosé.

6. Procédé selon la revendication 5, dans lequel chaque deuxième additif est choisi dans le groupe constitué par le polyéthylène glycol (« PEG »), les polyphtalamides (« PPA ») et leurs mélanges.

7. Procédé selon l'une des revendications 1 à 6, dans lequel les additifs ont une granulométrie d'au plus 100 microns et dans lequel, au cours de l'étape (57, 23) de séparation de particules, les plus petites particules ont une granulométrie inférieure à 2000 microns.

8. Procédé selon l'une des revendications 1 à 7, dans lequel le matériau polymère de départ comprend au moins un polymère choisi dans le groupe constitué par les polymères du type styrène-butadiène-styrène (« SBS »), styrène-éthylène-butadiène-styrène (« SEBS ») ou butadiène-acrylonitrile (« NBR »), les polymères fluorés, les polymères obtenus par coagulation ou par voie humide, les élastomères fluorés à forte viscosité et les polymères de masse moléculaire élevée, ne pouvant être extrudé.

9. Dispositif pour l'obtention d'un matériau polymère additivé granulaire sec, qui comporte un premier broyeur (12) de blocs d'un matériau polymère de départ alimenté en gaz chaud, pour obtenir un matériau polymère broyé sous forme de particules, qui comporte, de plus :
- un premier moyen (16 à 19) de dosage d'au moins un premier additif et d'addition aux particules de matériau polymère broyé, de chaque premier additif dosé ;
- un moyen de séparation (15) solide/gaz pour séparer les matières solides et le gaz chargé d'humidité issus du premier moyen d'addition ;
- un premier mélangeur (22) pour mélanger les matières solides ;
- un séparateur (23) de particules pour séparer des plus grosses particules issues du mélangeur des plus petites particules issues du mélangeur ;
- un deuxième broyeur (24) pour broyer les plus grosses particules, alimenté en gaz chaud,
- un moyen de ré-injection des particules sortant du deuxième broyeur dans le moyen de séparation (15) solide/gaz et
- un moyen (28) de conditionnement des plus petites particules mélangées constituées de matériau polymère additivé granulaire sec.

10. Dispositif selon la revendication 9, dans lequel le premier moyen (16 à 19) de dosage et d'addition de chaque premier additif dosé est configuré pour transporter le matériau polymère broyé vers le moyen de séparation (15) solide/gaz.

11. Dispositif selon l'une des revendications 9 ou 10, qui comporte, en outre, un deuxième mélangeur (26) pour mélanger des plus petites particules issues du séparateur (23) de particules.

12. Dispositif selon l'une des revendications 9 à 10, dans lequel le premier moyen de dosage est configuré pour fournir au moins un premier additif choisi dans le groupe constitué par la silice, le talc, les polyphtalamides (« PPA »), les antioxydants, le carbonate de calcium, le sulfate de baryum et les mélanges de ces composés.

13. Dispositif selon l'une des revendications 9 à 12, qui comporte, en outre :
- un deuxième moyen (29, 30) de dosage d'au moins un deuxième additif,
- un deuxième moyen (29, 30) d'addition aux particules les plus petites issues du séparateur (23) de particules, de chaque deuxième additif dosé.

14. Dispositif selon la revendications 13, dans lequel le deuxième moyen de dosage est configuré pour fournir au moins un deuxième additif choisi dans le groupe constitué par le polyéthylène glycol (« PEG »), les polyphtalamides (« PPA ») et les mélanges de ces composés.

15. Dispositif selon l'une des revendications 9 à 14, dans lequel le premier broyeur est configuré pour fournir du matériau polymère comprenant au moins un polymère choisi dans le groupe constitué par les polymères du type styrène-butadiène-styrène (« SBS »), styrène-éthylène-butadiène-styrène (« SEBS ») ou butadiène-acrylonitrile (« NBR »), les polymères fluorés, les polymères obtenus par coagulation ou par voie humide, les élastomères fluorés à forte viscosité et les polymères de masse moléculaire élevée, ne pouvant être extrudé.

## Patentansprüche

1. Verfahren für den Erhalt eines trockenen körnigen additivierten Polymermaterials, das einen ersten Schritt (50) zum Zerkleinern von Blöcken eines Ausgangspolymermaterials in einem ersten Zerkleinerer (12) umfasst, der mit heißem Gas versorgt wird, um ein zerkleinertes Polymermaterial in Form von Teilchen zu erhalten, weiter umfassend:
- einen ersten Schritt (51, 16 bis 19) zum Dosieren von mindestens einem ersten Additiv,
- einen ersten Schritt (53, 16 bis 19) zum Beigeben zu den Teilchen aus zerkleinertem Polymermaterial jedes ersten dosierten Additivs;
- einen Schritt (55, 15) zum Trennen von Feststoff/Gas im Laufe dessen man die Feststoffe und das feuchte Gas aus dem ersten Schritt zum Beigeben trennt;
- einen ersten Schritt (56) zum Mischen der Feststoffe durch Anwenden eines Mischers (22);
- einen Schritt (57, 23) zum Trennen von Teilchen zum Trennen der größeren Teilchen aus dem Mischer (22) von den kleineren Teilchen aus dem Mischer (22);
- einen zweiten Schritt (58) zum Zerkleinern der größeren Teilchen mit einem zweiten Zerkleinerer (24) der mit heißem Gas versorgt wird,
- einen Schritt (59) zur erneuten Injektion der Teilchen aus dem zweiten Schritt (58, 24) zum Zerkleinern, um sie zum Schritt (15) zum Trennen von Feststoff/Gas zurückzuführen,
- einen Schritt (61, 28) zum Konditionieren der kleineren gemischten Teilchen, die aus trockenem körnigem additiviertem Polymermaterial gebildet werden.

2. Verfahren nach Anspruch 1, wobei man das zerkleinerte Polymermaterial im Laufe des ersten Schrittes (53) zum Beigeben jedes ersten dosierten Additivs zu einem Mittel (15) zum Trennen von Feststoff/Gas transportiert, das den Schritt zum Trennen von Feststoff/Gas durchführt.

3. Verfahren nach einem der Ansprüche 1 oder 2, das weiter einen zweiten Schritt (60,26) zum Mischen der kleineren Teilchen aus dem Schritt (57, 23) zum Trennen von Teilchen vor dem Schritt (61, 28) zum Konditionieren umfasst.

4. Verfahren nach einem der Ansprüche 1 bis 3, wobei jedes erste Additiv aus der Gruppe ausgewählt wird, die aus Kieselsäure, Talk, Polyphtalamiden ("PPA"), Antioxidantien, Kalziumkarbonat, Bariumsulfat und Gemischen dieser Verbindungen besteht.

5. Verfahren nach einem der Ansprüche 1 à 4, das weiter umfasst:
- einen zweiten Schritt (52, 29, 30) zum Dosieren von mindestens einem zweiten Additiv,
- einen zweiten Schritt (54) zum Beigeben zu den kleinsten Teilchen aus dem Schritt (57, 23) zum Trennen von Teilchen, jedes zweiten dosierten Additivs.

6. Verfahren nach Anspruch 5, wobei jedes zweite Additiv aus der Gruppe ausgewählt wird, die aus Polyethylenglycol ("PEG"), Polyphtalamiden ("PPA") und deren Gemischen besteht.

7. Verfahren nach einem der Ansprüche 1 bis 6, wobei die Additive eine Korngröße von höchstens 100 Mikron aufweisen und wobei im Laufe des Schrittes (57, 23) zum Trennen von Teilchen die kleineren Teilchen eine Korngröße von weniger als 2000 Mikron aufweisen.

8. Verfahren nach einem der Ansprüche 1 bis 7, wobei das Ausgangspolymermaterial mindestens ein Polymer umfasst, das aus der Gruppe ausgewählt wird, die aus den Polymeren des Typs Styrol-Butadien-Styrol ("SBS"), Styrol-Ethylen-Butadien-Styrol ("SEBS") oder Butadien-Acrylnitril ("NBR"), Fluorpolymeren, Polymeren, die durch Koagulation oder durch Nassverfahren erhalten werden, Fluorpolymeren mit hoher Viskosität und Polymeren mit hohem Molekulargewicht, besteht, der nicht extrudiert werden kann.

9. Vorrichtung für den Erhalt eines trockenen körnigen additivierten Polymermaterials, die einen ersten Zerkleinerer (12) für Blöcke eines Ausgangspolymermaterials umfasst, der mit heißem Gas versorgt wird, um ein zerkleinertes Polymermaterial in Form von Teilchen zu erhalten, weiter umfassend:
- ein erstes Mittel (16 bis 19) zum Dosieren von mindestens einem ersten Additiv und zum Beigeben zu den Teilchen aus zerkleinertem Polymermaterial jedes ersten dosierten Additivs;
- ein Mittel zum Trennen (15) von Feststoff/Gas zum Trennen von Feststoffen und dem feuchten Gas aus dem ersten Mittel zum Beigeben;
- einen ersten Mischer (22) zum Mischen der Feststoffe;
- eine Trenneinrichtung (23) für Teilchen zum Trennen der größeren Teilchen aus dem Mischer von den kleineren Teilchen aus dem Mischer;
- einen zweiten Zerkleinerer (24) zum Zerkleinern der größeren Teilchen, der mit heißem Gas versorgt wird,
- ein Mittel zur erneuten Injektion der Teilchen aus dem zweiten Zerkleinerer herauskommen, in das Mittel zum Trennen (15) von Feststoff/Gas und
- ein Mittel (28) zum Konditionieren der kleineren gemischten Teilchen, die aus trockenem körnigem additiviertem Polymermaterial gebildet werden.

10. Vorrichtung nach Anspruch 9, wobei das erste Mittel (16 à 19) zum Dosieren und zum Beigeben jedes ersten dosierten Additivs konfiguriert ist, um das zerkleinerte Polymermaterial zum Mittel zum Trennen (15) von Feststoff/Gas zu transportieren.

11. Vorrichtung nach einem der Ansprüche 9 oder 10, die weiter einen zweiten Mischer (26) zum Mischen der kleineren Teilchen aus der Trenneinrichtung (23) für Teilchen umfasst.

12. Vorrichtung nach einem der Ansprüche 9 bis 10, wobei das erste Mittel zum Dosieren konfiguriert ist, um mindestens ein erstes Additiv zuzuführen, das aus der Gruppe ausgewählt wird, die aus Kieselsäure, Talk, Polyphtalamiden ("PPA"), Antioxidantien, Kalziumkarbonat, dem Bariumsulfat und den Gemischen dieser Verbindungen besteht.

13. Vorrichtung nach einem der Ansprüche 9 bis 12, die weiter umfasst:
- ein zweites Mittel (29, 30) zum Dosieren von mindestens einem zweiten Additiv,
- ein zweites Mittel (29, 30) zum Beigeben zu den kleinsten Teilchen aus der Trenneinrichtung (23) von Teilchen jedes zweiten dosierten Additivs.

14. Vorrichtung nach Anspruch 13, wobei das zweite Mittel zum Dosieren konfiguriert ist, um mindestens ein zweites Additiv bereitzustellen, das aus der Gruppe ausgewählt wird, die aus dem Polyethylenglycol ("PEG"), Polyphtalamiden ("PPA") und deren Gemischen besteht.

15. Vorrichtung nach einem der Ansprüche 9 bis 14, wobei der erste Zerkleinerer konfiguriert ist, um Polymermaterial bereitzustellen, das mindestens ein Polymer umfasst, das aus der Gruppe ausgewählt wird, die aus den Polymeren des Typs Styrol-Butadien-Styrol ("SBS"), Styrol-Ethylen-Butadien-Styrol ("SEBS") oder Butadien-Acrylnitril ("NBR"), Fluorpolymeren, Polymeren, die durch Koagulation oder durch Nassverfahren erhalten werden, Fluorpolymeren mit hoher Viskosität und Polymeren mit hohem Molekulargewicht, besteht, der nicht extrudiert werden kann.

## Claims

1. Method for obtaining a dry granular additive-enhanced polymer material, which comprises a first step (50) of grinding blocks of a starting polymer material in a first grinder (12) supplied with hot gas, in order to obtain a ground polymer material in the form of particles, which also comprises:
- a first step (51, 16 to 19) of metering out at least a first additive;
- a first step (53, 16 to 19) of adding each first metered-out additive to the particles of ground polymer material;
- a step (55, 15) of solid/gas separation during which the solid materials and the moisture-laden gas output from the first addition step are separated;
- a first step (56) of mixing the solid materials utilizing a mixer (22);
- a particle separation step (57, 23) to separate the largest particles output from the mixer (22) from the smallest particles output from the mixer (22);
- a second step (58) of grinding the largest particles with a second grinder (24) supplied with hot gas;
- a step (59) of reinjecting the particles output from the second grinding step (58, 24) in order to return them to the solid/gas separation step (15);
- a step (61, 28) of packaging the smallest mixed particles consisting of dry granular additive-enhanced polymer material.

2. Method according to claim 1, wherein, during the first step (53) of adding each first metered-out additive, the ground polymer material is transported to a solid/gas separation means (15) performing the solid/gas separation step.

3. Method according to one of claims 1 or 2, which also comprises a second step (60, 26) of mixing the smallest particles output from the particle separation step (57, 23), before the packaging step (61, 28).

4. Method according to one of claims 1 to 3, wherein each first additive is chosen from the group comprising silica, talc, polyphthalamides ("PPA"), antioxidants, calcium carbonate, barium sulfate and mixtures of these compounds.

5. Method according to one of claims 1 to 4, which also comprises:
- a second step (52, 29, 30) of metering out at least a second additive;
- a second step (54) of adding each second metered-out additive to the smallest particles output from the particle separation step (57, 23).

6. Method according to claim 5, wherein each second additive is chosen from the group comprising polyethylene glycol ("PEG"), polyphthalamides ("PPA") and their mixtures.

7. Method according to one of claims 1 to 6, wherein the additives have a particle size of at least 100 microns, and wherein, during the particle separation step (57, 23), the smallest particles have a particle size of less than 2,000 microns.

8. Method according to one of claims 1 to 7, wherein the starting polymer material comprises at least one polymer chosen from the group comprising styrene-butadiene-styrene ("SBS"), styrene-ethylene-butadiene-styrene ("SEBS") or butadiene-acrylonitrile ("NBR") types of polymers, fluoropolymers, polymers obtained by coagulation or wet-laying, high-viscosity fluoroelastomers, and high molecular weight polymers, which are non-extrudable.

9. Device for obtaining a dry granular additive-enhanced polymer material, which comprises a first grinder (12) supplied with hot gas, for grinding blocks of a starting polymer material to obtain a ground polymer material in the form of particles, which also comprises:
- a first means (16 to 19) for metering out at least a first additive and for adding each first metered-out additive to the particles of ground polymer material;
- a solid/gas separation means (15) for separating the solid materials and the moisture-laden gas output from the first addition means;
- a first mixer (22) for mixing the solid materials;
- a particle separator (23) for separating the largest particles output from the mixer from the smallest particles output from the mixer;
- a second grinder (24) supplied with hot gas, for grinding the largest particles;
- a means for reinjecting the particles output from the second grinder into the solid/gas separation means (15); and
- a means (28) for packaging the smallest mixed particles consisting of dry granular additive-enhanced polymer material.

10. Device according to claim 9, wherein the first means (16 to 19) for metering out and adding each first metered-out additive is configured to transport the ground polymer material to the solid/gas separation means (15).

11. Device according to one of claims 9 or 10, which also comprises a second mixer (26) for mixing the smallest particles output from the particle separator (23).

12. Device according to one of claims 9 to 10, wherein the first metering-out means is configured to supply at least a first additive chosen from the group comprising silica, talc, polyphthalamides ("PPA"), antioxidants, calcium carbonate, barium sulfate and mixtures of these compounds.

13. Device according to one of claims 9 to 12, which also comprises:
- a second means (29, 30) for metering out at least a second additive;
- a second means (29, 30) for adding each second metered-out additive to the smallest particles output from the particle separator (23).

14. Device according to claim 13, wherein the second metering-out means is configured to supply at least a second additive chosen from the group comprising polyethylene glycol ("PEG"), polyphthalamides ("PPA") and the mixtures of these compounds.

15. Device according to one of claims 9 to 14, wherein the first grinder is configured to supply polymer material comprising at least one polymer chosen from the group comprising styrene-butadiene-styrene ("SBS"), styrene-ethylene-butadiene-styrene ("SEBS") or butadiene-acrylonitrile ("NBR") types of polymers, fluoropolymers, polymers obtained by coagulation or wet-laying, high-viscosity fluoroelastomers, and high molecular weight polymers, which are non-extrudable.
